# EUROPEAN PATENT SPECIFICATION

(11) **EP 1 555 667 B1**
(45) Date of publication and mention of the grant of the patent: **14.02.2007**
(21) Application number: 04030797.7
(22) Date of filing: 27.12.2004
(51) Int. Cl.: G11B 7/24

(54) **Optical information recording medium**
Optischer Datenträger
Support d'enregistrement optique d'informations

(30) Priority: 25.12.2003 JP 2003430202
(43) Date of publication of application: 20.07.2005
(73) Proprietor: FUJI PHOTO FILM CO., LTD., Minami-Ashigara-shi, Kanagawa (JP)
(72) Inventor: Kakuta, Takeshi c/o Fuji Photo Film Co.,LTD., Odawara-shi Kanagawa (JP); Ozawa, Takako c/o Fuji Photo Film Co.,LTD., Odawara-shi Kanagawa (JP)
(74) Representative: HOFFMANN EITLE

(56) References cited:
- EP-A- 1 271 500
- US-A1- 2003 099 807
- PATENT ABSTRACTS OF JAPAN vol. 1997, no. 07, 31 July 1997 (1997-07-31) & JP 09 063115 A (MITSUI TOATSU CHEM INC), 7 March 1997 (1997-03-07)
- PATENT ABSTRACTS OF JAPAN vol. 016, no. 335 (M-1283), 21 July 1992 (1992-07-21) & JP 04 097889 A (TOYO INK MFG CO LTD), 30 March 1992 (1992-03-30)

## Description

### BACKGROUND OF THE INVENTION

### Field of the Invention

The present invention relates to an optical information recording medium and, more specifically, to a heat mode recordable optical information recording medium.

### Description of the Related Art

Conventionally, an optical information recording medium (optical disc) capable of recording information only once with laser beams is known. This optical disc is also called a CD-recordable (CD-R) and typically has, on a transparent disc substrate, a recording layer including an organic dye, a reflective layer including a metal such as gold, and a protective layer (cover layer) including a resin in this order. The CD-R is irradiated with a near-infrared laser beam (usually a laser beam having a wavelength in the vicinity of 780 nm), the irradiated region of the recording layer absorbs the beam, and the temperature thereof increases, whereby physical or chemical changes occur (e.g., formation of pits) to change the optical characteristics in that region, and thereby information is recorded on the CD-R. This information is read (reproduced) by irradiating the CD-R with a laser beam having a wavelength identical to that of the laser beam used in recording, and detecting a difference in reflectance between the region of the recording layer having changed optical characteristics (recording region) and the unchanged region (unrecorded region).

Optical information recording media having higher recording density have been demanded in recent years. In response to this demand, optical discs called recordable digital versatile discs (so-called DVD-R) were proposed (e.g., "Nikkei New Media" Separate volume "DVD", published in 1995). This DVD-R has a structure in which two discs obtained by laminating a recording layer containing an organic dye, a reflection layer and a protective layer in this order on a transparent disc substrate with a guide groove (pre-groove) for tracking of laser light to be applied having a groove width (0.74 to 0.8 µm) narrower than that of a CD-R by 50 % or more are bonded to each other such that the recording layers of these substrates face inside, or a structure in which such a disc is bonded to a disc protective substrate having the same shape as the disc such that the recording layer faces inside. Information is recorded in and reproduced from the DVD-R by irradiating the DVD-R with visible laser light (usually, laser light having a wavelength in a range from 630 nm to 680 nm) and this DVD-R enables recording at a higher density than a CD-R.

In recent years, networks such as the Internet, and high-vision television have been rapidly spreading. Further, High Definition Television (HDTV) broadcasting has already been initiated. Considering these circumstances, there is a need for a high-capacity recording medium capable of recording image information inexpensively and easily. DVD-R fulfils this need satisfactorily, but there is an increasing demand for even higher capacity and higher density, and a recording medium capable of satisfying this demand needs to be developed. Accordingly, a higher capacity recording medium capable of high-density recording with light of a shorter wavelength than that used for DVD-Rs is under development.

Methods for recording information on and reproducing information from an optical information recording medium including a recording layer containing an organic dye, by irradiating the medium with laser light having a wavelength of 530 nm or less, are disclosed in, for example, Japanese Patent Application Laid-Open (JP-A) Nos. 4-74690, 7-304256, 7-304257, 8-127174, 11-53758, 11-334204, 11-334205, 11-334206, 11-334207, 2000-43423, 2000-108513, 2000-113504, 2000-149320, 2000-158818 and 2000-228028. In these methods, information is recorded on and reproduced from an optical disc having a recording layer containing a porphyrin compound, an azo dye, a metal azo dye, a quinophthalone dye, a trimethine cyanine dye, a dicyanobiphenyl-skeleton dye, a coumarin dye, or a naphthalocyanine compound, by irradiating the optical disc with blue laser light (having a wavelength of 430 nm or 488 nm) or blue-green laser light (having a wavelength of 515).

EP 1271500 discloses a recording layer with specific phtalocyanine dyes suitable for recording of a wavelength of 450 nm or less.

In addition, a DVR-Blue disc was disclosed, which is a recordable optical information recording medium including an organic dye and which enables information recording and reproducing with blue-purple laser light (ISOM 2001, p. 218 and 219). These optical information recording media have attained certain results in response to demands for higher density.

When the recording layer contains an organic dye in these recordable optical information recording media, pits are generated by irradiating the media with laser light to record information, and these pits are used to reproduce the information. However, the recordable optical information recording media have a problem in that pits formed by irradiating the media with laser light may have a distorted or deformed shape depending on the quality of the recording layer, and in that adjoining pits therefore affect each other, which deteriorates recording characteristics. JP 09-063115 discloses an optical recording dish with a substrate treated to increase the hardness of substrate surface contacting the recording layer.

Therefore, there is a need for an optical information recording medium which can generate pits with high accuracy and has excellent recording characteristics.

### SUMMARY OF THE INVENTION

The inventors of the invention have found that the hardness of the surface of an organic recording layer containing an organic dye has a large influence on generation of pits, and have completed the invention.

The invention provides an optical information recording medium having a substrate and an organic recording layer disposed on the substrate, wherein the organic recording layer has a surface indentation hardness of 0.8 to 3.0 GPa at an indenter submerged depth in a range from 10 to 30 nm.

The invention can provide an optical information recording medium which can produce pits with high accuracy and has excellent recording characteristics by optimizing the surface hardness of the organic recording layer containing an organic dye.

### DETAILED DESCRIPTION OF THE INVENTION

The optical information recording medium of the invention will be explained in detail.

The optical information of the invention has a substrate and an organic recording layer disposed on the substrate, and the organic recording layer has a surface indentation hardness of 0.8 to 3.0 GPa at an indenter submerged depth in a range from 10 to 30 nm.

First, the organic recording layer in the invention will be explained.

It is essential that the organic recording layer in the invention has a surface indentation hardness of 0.8 to 3.0 GPa at an indenter submerged depth in a range from 10 to 30 nm. The organic recording layer preferably has a surface indentation hardness of 1.0 to 2.5 GPa and more preferably 1.2 to 2.0 GPa at an indenter submerged depth in a range from 10 to 30 nm.

When the indentation hardness is smaller than 0.8 GPa, deformation and distortion of pits produced by irradiating the medium with laser light are conspicuous. On the other hand, when the indentation hardness exceeds 3.0 GPa, the organic recording layer becomes too hard, which may suppress formation of pits. Controlling the indentation hardness of the organic recording layer in the above range gives a proper hardness to the organic recording layer, whereby exact pits can be produced.

Here, the surface indentation hardness of the organic recording layer in the invention is measured in the following manner.

A measuring device, in which a pickup electrode mounted with an indenter is disposed at the center between two electrostatic plates and which measures hardness by a method in which force and displacement are detected highly sensibly by utilizing a change in capacitance accompanying movement of the electrode, is used for measurement. Specifically, the hardness is measured with TRIBOSCOPE (manufactured by HYSITRO Company).

A diamond indenter to be used has a tetrahedron shape having a point angle of 90 degrees and a point curvature radius in a range of 35 to 50 nm. A maximum load is set such that, when the maximum load is applied to the organic recording layer, an indenter submerged depth falls in a range from 10 to 30 nm. Then, the indenter is pressed against the surface of the organic recording layer at right angle, the maximum load is applied, and the load is gradually reduced to 0. A value (P/A) obtained by dividing the maximum load P at this time by the projected area A of a portion of the indenter that is in contact with the organic recording layer (indenter contact portion) is defined as indentation hardness H in the invention. The projected area A of the indenter contact portion is obtained as follows. An initial 30% part of an unloading curve in a depth-load curve obtained by the indentation test is approximated as a straight line, the straight line is extrapolated, a depth value at a point where the straight line intersects with the axis of depth is regarded as the contact depth d of the indenter contact portion, and the projected area A is calculated as a function of d from the shape of the indenter.

The device is calibrated prior to measurement such that the resulting hardness of a standard sample, Fused Quartz, which hardness is obtained by indentation is 9 to 10 GPa.

In the invention, the indentation hardness is measured using the analysis command of a TRIBOSCOPE operation software. However, neither the measurement nor the calculation of the hardness is limited to the method adopted at this time.

The details of the method of measuring indentation hardness which method is used in the invention are described in IEEE TRANSACTIONS ON MAGNETICS, VOL. 33, NO. 5, September 1997.

The surface indentation hardness of the organic recording layer can be controlled in the above range by regulating at least one of the type of organic dye, coating conditions (type of solvent, coating thickness, drying temperature, humidity, the number of rotations of a spin coater and retention time during rotation) and conditions of annealing treatment of the applied organic recording layer.

More specifically, the indentation hardness can be controlled, for example, by selecting the type of the organic dye contained in the organic recording layer. The organic recording layer contains a desired organic dye having maximum absorption in the wavelength region of laser light. The organic dye is preferably a phthalocyanine dye.

A preferable phthalocyanine dye will be explained hereinafter in detail.

The phthalocyanine dye is preferably represented by the following Formula (I).

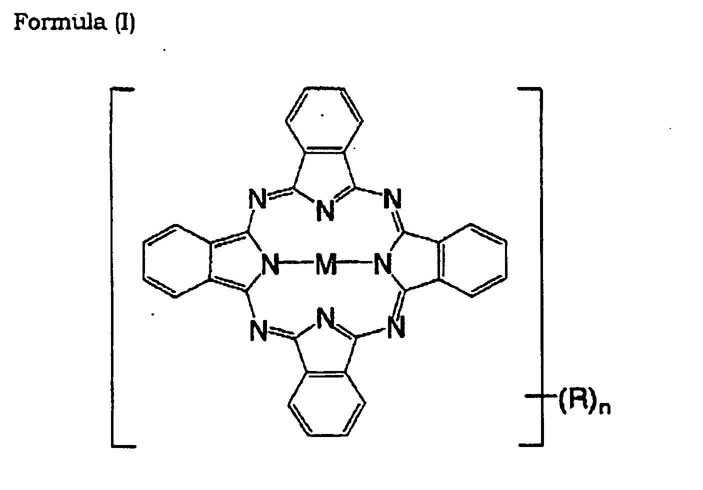

In Formula (I), M represents two hydrogen atoms, a divalent to tetravalent (divalent, trivalent, or tetravalent) metal atom, a divalent to tetravalent oxy metal atom, or a divalent to tetravalent metal atom having at least one ligand. R represents a substituent, and n denotes an integer from 1 to 8. When n is 2 or more, plural Rs may be the same or different.

The phthalocyanine dye represented by Formula (I) is particularly preferably a phthalocyanine dye represented by the following Formula (II).

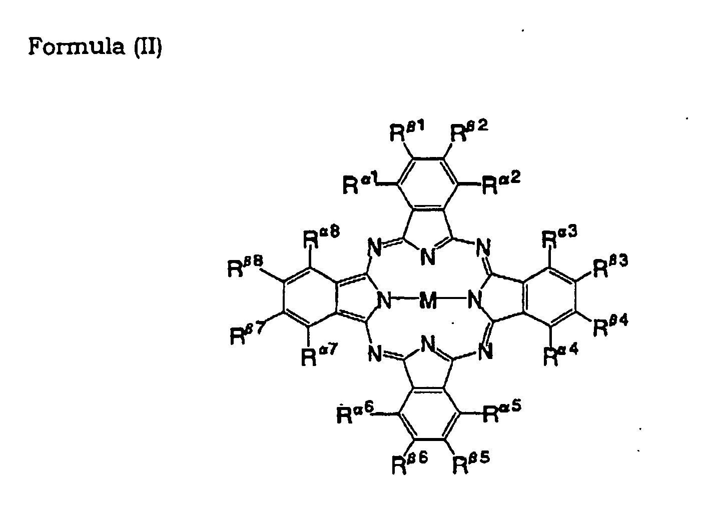

In Formula (II), M represents two hydrogen atoms, a divalent to tetravalent metal atom, a divalent to tetravalent oxy metal atom, or a divalent to tetravalent metal atom having at least one ligand. R^{α1} to R^{α8} and R^{β1} to R^{β8} each independently represent a hydrogen atom, a halogen atom, a cyano group, a nitro group, a formyl group, a carboxyl group, a sulfo group, an alkyl group, an aryl group, a heterocyclic group, an alkoxy group, an aryloxy group, an acyl group, an alkylsulfonyl group, an arylsulfonyl group, a heterylsulfonyl group, a carbamoyl group, a sulfamoyl group, an alkoxycarbonyl group, or an aryloxycarbonyl group. Here, R^{α1} to R^{α8} are not all hydrogen atoms and at least eight among R^{α1} to R^{α8} and R^{β1} to R^{β8} are hydrogen atoms.

More specifically, R^{α1} to R^{α8} and R^{β1} to R^{β8} in Formula (II) each independently represent a hydrogen atom, a halogen atom, a cyano group, a nitro group, a formyl group, a carboxyl group, a sulfo group, a substituted or unsubstituted alkyl group having 1 to 20 carbon atoms, a substituted or unsubstituted aryl group having 6 to 14 carbon atoms, a substituted or unsubstituted heterocyclic group having 1 to 10 carbon atoms, a substituted or unsubstituted alkoxy group having 1 to 20 carbon atoms, a substituted or unsubstituted aryloxy group having 6 to 14 carbon atoms, a substituted or unsubstituted acyl group having 2 to 21 carbon atoms, a substituted or unsubstituted alkylsulfonyl group having 1 to 20 carbon atoms, a substituted or unsubstituted arylsulfonyl group having 6 to 14 carbon atoms, a heterylsulfonyl group having 1 to 10 carbon atoms, a substituted or unsubstituted carbamoyl group having 1 to 25 carbon atoms, a substituted or unsubstituted sulfamoyl group having 0 to 32 carbon atoms, a substituted or unsubstituted alkoxycarbonyl group having 2 to 20 carbon atoms, or a substituted or unsubstituted aryloxycarbonyl group having 7 to 15 carbon atoms. Here, R^{α1} to R^{α8} are not all hydrogen atoms and at least eight among R^{α1} to R^{α8} and R^{β1} to R^{β8} are hydrogen atoms.

R^{α1} to R^{α8} and R^{β1} to R^{β8} each independently preferably represent a hydrogen atom, a halogen atom, a carboxyl group, a sulfo group, a substituted or unsubstituted alkyl group having 1 to 16 carbon atoms (e.g., a methyl group, an ethyl group, a n-propyl group or an iso-propyl group), a substituted or unsubstituted aryl group having 6 to 14 carbon atoms (e.g., a phenyl group, a p-methoxyphenyl group or a p-octadecylphenyl group), a substituted or unsubstituted alkoxy group having 1 to 16 carbon atoms (e.g., a methoxy group, an ethoxy group or a n-octyloxy group), a substituted or unsubstituted aryloxy group having 6 to 10 carbon atoms (e.g., a phenoxy group or a p-ethoxyphenoxy group), a substituted or unsubstituted alkylsulfonyl group having 1 to 20 carbon atoms (e.g., a methanesulfonyl group, a n-propylsulfonyl group or a n-octylsulfonyl group), a substituted or unsubstituted arylsulfonyl group having 6 to 14 carbon atoms (e.g., a toluenesulfonyl group or a benzenesulfonyl group), a substituted or unsubstituted sulfamoyl group having 0 to 20 carbon atoms (e.g., a methylsulfamoyl group or a n-butylsulfamoyl group), a substituted or unsubstituted alkoxycarbonyl group having 1 to 17 carbon atoms (e.g., a methoxycarbonyl group or a n-butoxycarbonyl group), or a substituted or unsubstituted aryloxycarbonyl group having 7 to 15 carbon atoms (e.g., a phenoxycarbonyl group or a m-chlorophenylcarbonyl group).

It is more preferable that R^{α1} to R^{α8} and R^{β1} to R^{β8} each independently represent a hydrogen atom, a halogen atom, a carboxyl group, a sulfo group, a substituted or unsubstituted alkyl group having 1 to 16 carbon atoms, a substituted or unsubstituted alkoxy group having 1 to 16 carbon atoms, a substituted or unsubstituted alkylsulfonyl group having 1 to 20 carbon atoms, a substituted or unsubstituted arylsulfonyl group having 6 to 14 carbon atoms, a substituted or unsubstituted sulfamoyl group having 2 to 20 carbon atoms, or a substituted or unsubstituted alkoxycarbonyl group having 1 to 13 carbon atoms.

It is still more preferable that R^{α1} to R^{α8} each independently represent a hydrogen atom, a halogen atom, a sulfo group, a substituted or unsubstituted alkoxy group having 1 to 16 carbon atoms, a substituted or unsubstituted alkylsulfonyl group having 1 to 20 carbon atoms, a substituted or unsubstituted arylsulfonyl group having 6 to 14 carbon atoms, or a substituted or unsubstituted sulfamoyl group having 2 to 20 carbon atoms, and that R^{β1} to R^{β8} each independently represent a hydrogen atom, or a halogen atom.

It is particularly preferable that R^{α1} to R^{α8} each independently represent a hydrogen atom, a sulfo group, an unsubstituted alkylsulfonyl group having 1 to 20 carbon atoms, an unsubstituted arylsulfonyl group having 6 to 14 carbon atoms, or an unsubstituted sulfamoyl group having 7 to 20 carbon atoms, and that R^{β1} to R^{β8} each independently represent a hydrogen atom.

A total of four substituents, that is, either one of R^{α1} and R^{α2}, either one of R^{α3} and R^{α4}, either one of R^{α5} and R^{α6} and either one of R^{α7} and R^{α8}, in the phthalocyanine dye represented by Formula (II) are not hydrogen atoms at the same time.

In Formula (II), R^{α1} to R^{α8} and R^{β1} to R^{β8} may further have a substituent. Examples of the substituent include chain or cyclic substituted or unsubstituted alkyl groups having 1 to 20 carbon atoms (e.g., a methyl group, an ethyl group, an iso-propyl group, a cyclohexyl group, a benzyl group and a phenethyl group), substituted or unsubstituted aryl groups having 6 to 18 carbon atoms (e.g., a phenyl group, a chlorophenyl group, a 2,4-di-t-amylphenyl group and a 1-naphthyl group), substituted or unsubstituted alkenyl groups having 2 to 20 carbon atoms (e.g., a vinyl group and a 2-methylvinyl group), substituted or unsubstituted alkynyl groups having 2 to 20 carbon atoms (e.g., an ethynyl group, a 2-methylethynyl group and a 2-phenylethynyl group), halogen atoms (e.g., F, Cl, Br and I), a cyano group, a hydroxyl group, a carboxyl group, substituted or unsubstituted acyl groups having 2 to 20 carbon atoms (e.g., an acetyl group, a benzoyl group, a salicyloyl group and pivaloyl group), substituted or unsubstituted alkoxy group having 1 to 20 carbon atoms (e.g., a methoxy group, a butoxy group and a cyclohexyloxy group), substituted or unsubstituted aryloxy groups having 6 to 20 carbon atoms (e.g., a phenoxy group, a 1-naphthoxy group and a p-methoxyphenoxy group), substituted or unsubstituted alkylthio groups having 1 to 20 carbon atoms (e.g., a methylthio group, a butylthio group, a benzylthio group and a 3-methoxypropylthio group), substituted or unsubstituted arylthio groups having 6 to 20 carbon atoms (e.g., a phenylthio group and a 4-chlorophenylthio group), substituted or unsubstituted alkylsulfonyl groups having 1 to 20 carbon atoms (e.g., a methanesulfonyl group and a butanesulfonyl group), substituted or unsubstituted arylsulfonyl groups having 6 to 20 carbon atoms (e.g., a benzenesulfonyl group and a p-toluenesulfonyl group), substituted or unsubstituted carbamoyl groups having 1 to 17 carbon atoms (e.g., an unsubstituted carbamoyl group, a methylcarbamoyl group, an ethylcarbamoyl group, a n-butylcarbamoyl group and a dimethylcarbamoyl group), substituted or unsubstituted acylamino groups having 1 to 16 carbon atoms (e.g., an acetylamino group and a benzoylamino group), substituted or unsubstituted acyloxy groups having 2 to 10 carbon atoms (e.g., an acetoxy group and a benzoyloxy group), substituted or unsubstituted alkoxycarbonyl groups having 2 to 10 carbon atoms (e.g., a methoxycarbonyl group and an ethoxycarbonyl group), and five- or six-membered substituted or unsubstituted heterocyclic groups (e.g., aromatic heterocyclic groups such as a pyridyl group, a thienyl group, a furyl group, a thiazolyl group, an imidazolyl group and a pyrazolyl group; and heterocyclic groups such as a pyrrolidine cyclic group, a piperidine cyclic group, a morpholine cyclic group, a pyran cyclic group, a thiopyran cyclic group, a dioxane cyclic group and a dithiolan cyclic group).

The substituent which may be introduced into R^{α1} to R^{α8} and R^{β1} to R^{β8} in Formula (II) is preferably a chain or cyclic substituted or unsubstituted alkyl group having 1 to 16 carbon atoms, an aryl group having 6 to 14 carbon atoms, an alkoxy group having 1 to 16 carbon atoms, an aryloxy group having 6 to 14 carbon atoms, a halogen atom, an alkoxycarbonyl group having 2 to 17 carbon atoms, a carbamoyl group having 1 to 10 carbon atoms, or an acylamino group having 1 to 10 carbon atoms. The substituent is more preferably a chain or cyclic alkyl group having 1 to 10 carbon atoms, an aryl group having 6 to 10 carbon atoms, an alkoxy group having 1 to 10 carbon atoms, an aryloxy group having 6 to 10 carbon atoms, a chlorine atom, an alkoxycarbonyl group having 2 to 11 carbon atoms, a carbamoyl group having 1 to 7 carbon atoms or an acylamino groups having 1 to 8 carbon atoms.

The substituent is still more preferably a chain branched or cyclic substituted or unsubstituted alkyl group having 1 to 8 carbon atoms, an alkoxy group having 1 to 8 carbon atoms, an alkoxycarbonyl group having 3 to 9 carbon atoms, a phenyl group or a chlorine atom, and most preferably an unsubstituted alkoxy group having 1 to 6 carbon atoms.

M in Formula (II) is preferably a divalent to tetravalent metal atom. Specifically, M is preferably a copper atom, a nickel atom or a palladium atom, more preferably a copper atom or a nickel atom, and still more preferably a copper atom.

The compounds represented by Formula (I) or (II) may bond to each other at an arbitrary position or positions to form a polymer. In this case, moieties of the polymer may be the same or different. In addition, the compound represented by Formula (I) or (II) may bond to a polymer chain such as polystyrene, polymethacrylate, polyvinyl alcohol or cellulose.

One phthalocyanine dye represented by Formula (I) or (II) may be used, or two or more phthalocyanine dyes represented by Formula (I) and/or (II) and having different structures can be used together. It is particularly preferable to use a mixture of isomers differing in the substituted position of a substituent for the purpose of preventing crystallization of the organic recording layer.

Typical examples (I-1) to (I-51) of the phthalocyanine dye used in the invention are shown below. However, the phthalocyanine dye used in the invention is not limited to these examples.

In Tables 1 to 5, for example, the notation "R^{x}/R^{y}" (in which x and y each represent any one of α1 to α8 and β1 to β8) means either one of R^{x} and R^{y}. Therefore, a compound having this notation represents a mixture of isomers differing in substituted position. In cases of non-substitution, i.e., cases where one or more hydrogen atoms are bonded, notation is omitted.

**Table 1**

| NO. | Substituent introduction position and substituent | M |
|---|---|---|
| (I-1) | R^{α1}/R^{α2},R^{α3}/R^{α4},R^{5α}/R^{6α},R^{α7}/R^{α8} -SO₂(4-morpholino) | Co |
| (I-2) | R^{α1}/R^{α2},R^{α3}/R^{α4},R^{α5}/R^{α6},R^{α7}/R^{α8} -SO₂(2-*n*-propoxyphenyl) | Cu |
| (I-3) | R^{α1}/R^{α2},R^{α3}/R^{α4},R^{α5}/R^{α6},R^{α7}/R^{α8} -SO₂(2-*n*-butoxy-5-*t*-butylphenyl) | Ni |
| (I-4) | R^{α1}/R^{α2},R^{α3}/R^{α4},R^{α5}/R^{α6},R^{α7}/R^{α}8 -SO₂(2-methoxycarbonylphenyl) | Co |
| (I-5) | R^{α1}/R^{α2},R^{α3}/R^{α4},R^{α5}/R^{α6},R^{α7}/R^{α8} -SO₂(CH₂)₄O(2-chloro-4-*t*-amylphenyl) | Cu |
| (I-6) | R^{α1}/R^{α2},R^{α3}/R^{α4},R^{α5}/R^{α6},R^{α7}/R^{α8} -SO₂(CH₂)₂CO₂G₄H₉-*i* | Pd |
| (I-7) | R^{α1}/R^{α2},R^{α3}/R^{α4},R^{α5}/R^{α6},R^{α7}/R^{α8} -SO₂(cyclohexyl) | Cu |
| (I-8) | R^{α1}/R^{α2},R^{α3}/R^{α4},R^{α5}/R^{α6} -SO₂(2, 6-dichloro-4-methoxyphenyl) | Pd |
| (I-9) | R^{α1}/R^{α2},R^{α3}/R^{α4},R^{α5}/R^{α6} -SO₂CH(CH₃){CO₂CH₂-CH(C₂H₅)C₄H₈-*n*} | Mg |
| (I-10) | R^{α1}/R^{α2},R^{α3}/R^{α4},R^{α6}/R^{α5},R^{α7}/R^{α8} -SO₂[2-(2-ethoxyethoxy)-phenyl} R^{β1}/R^{β2},R^{β3}/R^{β4},R^{β5}/R^{β6},R^{β7}/R^{β8} -C₂H₅ | Zn |
| (I-17) | R^{α1}/R^{α2},R^{α3}/R^{α4},R^{α5}/R^{α6},R^{α7}/R^{α8} -OCH₂CH(C₂H₅)(C₄H₅-n) | Ni |
| (I-12) | R^{α1}/R^{α2},R^{α3}/R^{α4},R^{α5}/R^{α8},R^{α7}/R^{α8} -OCH(CH₃) (phenyl) | Zn |

**Table 2**

| NO. | Substituent introduction position and substituent | M |
|---|---|---|
| (I-13) | R^{α1}/R^{α2},R^{α3}/R^{α4},R^{α5}/R^{α6},R^{α7}/R^{α8} -OCH(*s*-butyl)₂ | Cu |
| (I-14) | R^{α1}/R^{α2},R^{α3}/R^{α4},R^{α5}/R^{α6},R^{α7}/R^{α8} -OCH₂CH₂OC₃H₇-*i* | SiCl₂ |
| (I-15) | R^{α1}/R^{α2},R^{α3}/R^{α4},R^{α5}/R^{α6},R^{α7}/R^{α8} -*t*-amyl R^{β1}/R^{β2},R^{β3}/R^{β4},R^{β5}/R^{β6},R^{β7}R^{β8} -Cl | Ni |
| (I-16) | R^{α1}/R^{α2},R^{α3}/R^{α4},R^{α5}/R^{α6},R^{α7},R^{α8} -2, 6-di-ethoxyphenyl | Zn |
| (I-17) | R^{α1}/R^{α2},R^{α3}R^{α4}R^{α5}/R^{α6} -CO₂CH₂CH₂OC₂H₆ R^{α7}/R^{α8} -CO₂H | Cu |
| (I-18) | R^{α1}/R^{α2},R^{α3}/R^{α4},R^{α5}/R^{α6},R^{α7}/R^{α8} -CO₂CH(CH₂)(CO₂C₃H₇-*i*) | Co |
| (I-19) | R^{α1}/R^{α2},R^{α3}/R^{α4},R^{α5}/R^{α6},R^{α7}/R^{α8} -SO₂CH₃ | Ni |
| (I-20) | R^{α1}/R^{α2},R^{α3}/R^{α4},R^{α5}/R^{α6},R^{α7}/R^{α8} -SO₂CH(CH₃)₂ | Cu |
| (I-21 ) | R^{α1}/R^{α2},R^{α3}/R^{α4},R^{α5}/R^{α6},R^{α7}/R^{α8} -SO₂C₄H₉-s | Cu |
| (I-22) | R^{α1}/R^{α2},R^{α3}/R^{α4},R^{α5}/R^{α6},R^{α7}/R^{α8} -SO₂CH₂CO₂CHCH₃)₂ | Cu |
| (I-23) | R^{α1}/R^{α2},R^{α3}/R^{α4},R^{α5}/R^{α6},R^{α7}/R^{α8} -SO₂CH(CH₃)(CO₂CH₃) | Cu |
| (I-24) | R^{α1}/R^{α2},R^{α3}/R^{α4},R^{α5}/R^{α8},R^{α7}/R^{α8} -SO₂C₆H₅ | Cu |

**Table 3**

| NO. | Substituent introduction position and substituent | M |
|---|---|---|
| (I-25) | R^{α1}/R^{α2},R^{α3}/R^{α4},R^{α5}/R^{α6},R^{α7}/R^{α8} -SO₂CH(CH₃)₂ | Cu |
| (I-26) | R^{α1}/R^{α2},R^{α3}/R^{α4},R^{α5}/R^{α6},R^{α7}/R^{α8} -SO₂C(CH₃)₃ | Cu |
| (I-27) | R^{α1}/R^{α2},R^{α3}/R^{α4},R^{α5}/R^{α6},R^{α7}/R^{α8} -SO₂C(CH₃)₂{CH₂C(CH₃)₃} | Cu |
| (I-28) | R^{α1}/R^{α2},R^{α3}/R^{α4},R^{α5}/R^{α6},R^{α7}/R^{α8} -SO₂C(CH₃)₂(CO₂C₂H₅) | Cu |
| (I-29) | R^{α1}/R^{α2},R^{α3}/R^{α4},R^{α5}/R^{α6},R^{α7}/R^{α8} -SO₂C(CH₃)₂(OCH₃) | Cu |
| (I-30) | R^{α1}/R^{α2},R^{α3}/R^{α4},R^{α5}/R^{α6},R^{α7}/R^{α8} -SO₂C(CH₃)₂(CN) | Cu |
| (I-31) | R^{α1}/R^{2α},R^{α3}/R^{α4},R^{α5}/R^{α6},R^{α7}/R^{α8} -SO₂CF₂CF₂CF₃ | Cu |
| (I-32) | R^{α1}/R^{α2}R^{α3}/R^{α4},R^{α5}/R^{α6},R^{α7}/R^{α8} -SO₂C(CH₃)₂{CH₂CH₂CO₂(phenyl)} | Cu |
| (I-33) | R^{α1}/R^{α2},R^{α3}/R^{α4},R^{α5}/R^{α6},R^{α7}/R^{α8} -SO₂C(CH₃)₂{CO(phenyl)} | Cu |
| (I-34) | R^{α1}/R^{α2},R^{α3}/R^{α4},R^{α5}/R^{α6},R^{α7}/R^{α8} -SO₂C(CH₃)₂(CH₂CH₃) | Cu |
| (I-35) | R^{α1}/R^{α2},R^{α3}/R^{α4},R^{α5}/R^{α6},R^{α7}/R^{α8} -SO₂C(CH₃)₃ | Pd |
| (I-36) | R^{α1}/R^{α2},R^{α3}/R^{α4},R^{α5}/R^{α6},R^{α7}/R^{α8} -SO₂C(CH₃)₃ | SiCl₂ |

**Table 4**

| NO. | Substituent introduction position and substituent | M |
|---|---|---|
| (I-37) | R^{α1}/R^{α2},R^{α3}/R^{α4},R^{α5}/R^{α6},R^{α7}/R^{α8} -SO₂C(CH₃)₂(CO₂C₂H₅) | Ni |
| (I-38) | R^{β1}/R^{β2},R^{β3}/R^{β4}*,*R^{β5}/R^{β6},B^{β7}/R^{β8} -SO₂C(CH₃)₃ | Cu |
| (I-39) | R^{α1}/R^{α2},R^{α3}/R^{α4},R^{α5}/R^{6α},R^{α7}/R^{α8} -SO₂C(CH₃)₃ R^{β1}/R^{β2},R^{β3}/R^{β4},R^{β5}/R^{β6},R^{β7}/R^{β8} -Br | Cu |
| (1-40) | R^{α1}/R^{α2},R^{α3}/R^{α4},R^{α5}/R^{α6},R^{α7}/R^{α8} R^{β1}/R^{β2},R^{β3}/R^{β4},R^{β5}/R^{β6},R^{β7}/R^{β8} -SO₂C(CH₃)₃ | Cu |
| (I-41) | R^{α1}/R^{α2},R^{α3}/R^{α4}R^{α5}/R^{α6},R^{α7}/R^{α8} R^{α1}/R^{α2},R^{α3}/R^{α4},R^{α5}/R^{α7}/R^{α8} -SO₂C(1 -Methylcyclohexyl)₃ | Cu |
| (I-42) | R^{α1}/R^{α2},R^{α3}/R^{α},R^{α5}/R^{α6},R^{α7}/R^{α} -SO₂C(CH₃)₃ | V=O |
| (I-43) | R^{α1}R^{α2},R^{α3}/R^{α4},R^{α5}/R^{α6},R^{α7}/R^{α8} -SO₂C(CH₃)₃ | Co |
| (I-44) | R^{α1}/R^{α2},R^{α3}/R^{α4},R^{α5}/R^{α6},R^{α7}/R^{α8} -SO₂C(CH₃)₃ | Mg |
| (I-45) | R^{α1}/R^{α2},R^{α3}/R^{α4},R^{α5}/R^{α6},R^{α7}/R^{α8} -SO₂C(CH₃)₃ | Al |
| (I-46) | R^{α1}/R^{α2},R^{α3}/R^{α4},R^{α5}/R^{α6},R^{α7}/R^{α8} -SO₂C(CH₃)₃ | Zn |

**Table 5**

| NO. | Substituent introduction position and substituent | M |
|---|---|---|
| (I-47) | R^{α1}/R^{α2},R^{α3}/R^{α4},R^{α5}/R^{α6},R^{α7}/R^{α8} -OCH{CH(CH₃)₂}₂ | Cu |
| (1-48) | R^{α1}/R^{α2},R^{α3}/R^{α4},R^{α5}/R^{α6},R^{α7}/R^{α8} -OCH{CH(CH₃)₂}₂ R^{α1}/R^{α2},R^{α3}/R^{α4},R^{α5}/R^{α6},R^{α7}/R^{α8} -Br | Cu |
| (I-49) | R^{α1}/R^{α2},R^{α3}/R^{α4},R^{α5}/R^{α6},R^{α7}/R^{α8} -OCH{CH(CH₃)₂}₂ | Pd |
| (I-50) | R^{α1}/R^{α2},R^{α3}/R^{α4},R^{α5}/R^{α6} - SO₂C(CH₃)₃ R^{α7}/R^{α8} -OCH{CH(CH₃)₂}₂ | Cu |
| (I-51) | R^{α1}/R^{α2},R^{α3}/R^{α4},R^{α5}/R^{α6},R^{α7}/R^{α8} -SO₂C(CH₃)₃ R^{α7}/R^{α8} -OCH{CH(CH₃)₂}₂ R^{α7}/R^{α8} -Br | Cu |

The organic recording layer containing such a phthalocyanine dye can be formed in the following manner. The phthalocyanine dye and other additives are dissolved in a proper solvent to prepare a coating solution, and the coating solution is applied to a surface of a substrate explained later which surface has a pre-groove, or to the surface of a light reflection layer to form a coating film, followed by drying.

The concentration of the phthalocyanine dye in the coating solution is preferably in a range from 0.01 to 10 mass % and more preferably in a range from 0.1 to 5 mass %.

The indentation hardness may be controlled by regulating coating conditions (type of solvent, coating thickness, drying temperature, humidity, the number of rotations of a spin coater and retention time during rotation).

For example, the organic recording layer is formed by application in the following manner. The coating solution is applied to the substrate at a low rotation speed of a spin coater (500 rpm). When the coating solution has been spread evenly on the surface of the substrate, the rotation speed is raised to a middle level (1000 rpm) and the raised speed is kept for 3 to 5 seconds. Thereafter, the rotation speed is further raised to a high level (2500 rpm), and this speed is kept for 5 seconds or more, and the resultant coating is sufficiently dried. This application is carried out at 23°C and 50% RH. The thickness of the coating film can be appropriately controlled and too quick drying can be prevented by changing rotation speed in the above manner. As a result, the organic dye molecules in the organic recording layer are densely arranged (oriented), which improves the indentation hardness of the layer.

Alternatively, the indentation hardness may be controlled by regulating conditions of annealing treatment of the applied organic recording layer.

When an optical information recording medium is produced, annealing treatment, in which a substrate, to which an organic recording layer coating solution has been applied, is retained in atmosphere kept at a temperature higher than ambient temperature for a fixed time, may be conducted to vaporize the solvent contained in the resultant coating layer and/or to stabilize the organic dye contained in the coating layer. The indentation hardness can be controlled by setting conditions of the annealing treatment at follows.

It is preferable that the annealing temperature be 40 to 100°C and that the annealing time be in a range of 30 minutes to 12 hours. It is more preferable that the annealing temperature be 60 to 90°C and that the annealing time be 30 minutes to 3 hours. It is still more preferable that the annealing temperature be 70 to 85°C and that the annealing time be 45 minutes to 2 hours. Also, the humidity is preferably 30% RH or less, more preferably 20% RH or less, and still more preferably 10% RH or less.

When the annealing temperature is less than 40°C, the solvent may be insufficiently vaporized. When the temperature exceeds 100°C, the substrate may deform, resulting in off-specification tilt.

When the time (retention time) is shorter than 30 minutes, the solvent may be insufficiently vaporized. When the time (retention time) is longer than 12 hours, the substrate may deform, resulting in off-specification tilt.

When the humidity is higher than 30% RH, the moisture content of the organic recording layer may increase and the strength of the coating may thereby deteriorate.

The annealing of the organic recording layer in the above manner causes the solvent in the organic recording layer to vaporize and the organic dye molecules to be densely arranged (oriented), improving indentation hardness.

The optical information medium of the invention, which includes an organic recording layer having an indentation hardness of 0.8 to 3.0 GPa at an indenter submerged depth ranging from 10 to 30 nm, has excellent recording characteristics. This is because pits, which are the most important for recording and reproducing information, are generated without distortion and deformation. Therefore, the optical information recording medium of the invention is particularly suitable for an optical information recording medium for high-density recording and reproduction. More specifically, the optical information recording medium of the invention is preferably used as an optical information recording medium for a system using blue-purple laser light to record and reproduce information.

Each element of the optical information recording medium of the invention will be explained. The optical information recording medium of the invention can have various structures. Specifically, the optical information recording medium of the invention may have any of the following structures: a structure (1) in which a recording layer, a light reflection layer and a protective layer are disposed in this order on a substrate on which a pre-groove is formed at a fixed track pitch, a structure (2) in which a light reflection layer, a recording layer and a protective layer are disposed in this order on a substrate on which a pre-groove is formed at a fixed track pitch, and a structure (3) in which two laminated, half-finished products having the same structure as the structure (2) are bonded to each other such that each recording layer faces inside.

The thickness of the substrate and the size of the pre-groove formed on the surface of the substrate are appropriately designed according to an optical information recording medium to be produced and may be the same as those of ordinary optical information recording media such as CD-Rs or DVD-Rs.

Hereinafter, the structure of an optical information recording medium used in a system using blue-purple laser light to record and reproduce information which medium is a typical embodiment of the optical information recording medium of the invention will be explained. However, the invention is not limited to this structure.

### Substrate

Examples of the substrate material include glass; polycarbonates, acrylic resins such as polymethyl methacrylate; vinyl chloride resins such as polyvinyl chloride and copolymers of polyvinyl chloride; epoxy resins; amorphous polyolefins; polyesters; and metals such as aluminum. If necessary, two or more of these materials may be used together. The substrate material is preferably polycarbonate or amorphous polyolefin, and more preferably polycarbonate in view of moisture resistance, dimensional stability and low cost.

The thickness of the substrate is preferably 1.1 ± 0.3 mm.

On the surface of the substrate, a guide groove for tracking or a pre-groove representing information such as address signals is formed. Preferably, the pre-groove is formed directly on the surface of the substrate, when a resin material such as polycarbonate is injection-molded or extrusion-molded.

The pre-groove may be formed by forming a pre-groove layer on the substrate. The material of the pre-groove layer may be a mixture of a photopolymerization initiator and at least one monomer (or oligomer) selected from monoesters, diesters, triesters and tetraesters of acrylic acids. In order to form the pre-groove layer, for example, a mixed solution of acrylate, and the photopolymerization initiator is first applied to a precisely-produced stamper, and a substrate is put on the resultant coating layer. Thereafter, the coating layer is irradiated with UV rays from the substrate side or the stamper side, so as to cure the coating layer. In this way, the substrate and the coating layer are bonded to each other. Next, the substrate is removed from the stamper, whereby the pre-groove layer may be disposed on the substrate. The thickness of the pre-groove layer is generally from 0.01 to 100 µm, and preferably from 0.05 to 50 µm.

In the invention, the track pitch of the pre-groove on the substrate is preferably from 200 to 400 nm, and more preferably from 250 to 350 nm.

The depth of the pre-groove is preferably from 10 to 150 nm, more preferably from 20 to 100 nm, and still more preferably from 30 to 80 nm. The half breadth of the pre-groove is preferably from 50 to 250 nm, and more preferably from 100 to 200 nm.

When a light reflection layer explained later is formed, an undercoat layer is preferably disposed between the substrate and the light reflection layer to improve flatness and adhesion.

Examples of the material of the undercoat layer include polymeric materials such as polymethyl methacrylate, acrylic acid/methacrylic acid copolymer, styrene/maleic acid anhydride copolymer, polyvinyl alcohol, N-methylolacrylamide, styrene/vinyltoluene copolymer, chlorosulfonated polyethylene, nitrocellulose, polyvinyl chloride, chlorinated polyolefin, polyester, polyimide, vinyl acetate/vinyl chloride copolymer, ethylene/vinyl acetate copolymer, polyethylene, polypropylene and polycarbonate; and surface modifiers such as silane coupling agents.

The undercoat layer may be formed by dissolving or dispersing the above material in a proper solvent to prepare a coating solution and applying the coating solution to the surface of the substrate by a coating method such as spin coating, dip coating or extrusion coating. The thickness of the undercoat layer is generally in a range from 0.005 to 20 µm and preferably in a range from 0.01 to 10 µm.

The light reflection layer is an optional layer provided between the substrate and the organic recording layer in order to improve reflectance at the time that information is reproduced. The light reflection layer can be formed by, for example, vacuum-depositing, sputtering or ion-plating a light reflection substance having a high reflectance with respect to laser light on the substrate. The thickness of the light reflection layer is generally 10 to 300 nm, and preferably 50 to 200 nm.

The reflectance of the light reflection layer or the light reflection substance is preferably 70 % or more.

Examples of the light reflection substance having a high reflectance include metals and semi-metals such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn and Bi, and stainless steel. Only one light reflection substance may be used, or two or more of them may be used together or used as an alloy. The light reflection substance is preferably Cr, Ni, Pt, Cu, Ag, Au, Al or stainless steel, more preferably Au, Ag, Al or an alloy of two or more of these metals, and most preferably Au, Ag or an alloy of these metals.

### Organic recording layer

The organic recording layer preferably contains an organic dye having maximum absorption in the wavelength region of laser light and preferably contains an organic dye having absorption in a wavelength region of less than 500 nm so as to enable information to be recorded and reproduced with a laser emitting light having the same wavelength as above (blue-purple laser light).

Specific examples of the organic dye to be used include dyes described in JP-A Nos. 4-74690, 8-127174, 11-53758, 11-334204, 11-334205, 11-334206, 11-334207, 2000-43423, 2000-108513 and 2000-158818, and triazole, triazine, cyanine, merocyanine, aminobutadiene, phthalocyanine, cinnamic acid, viologen, azo, oxonolbenzoxazole and benzotriazole dyes. The organic dye is preferably a cyanine, aminobutadiene, benzotriazole or phthalocyanine dye, and more preferably a phthalocyanine dye.

The organic recording layer may be formed by dissolving the above dye and, if necessary, a binder in a proper solvent to prepare a coating solution, applying the coating solution to the surface of the substrate which surface has a pre-groove, or the surface of the light reflection layer to provide a coating layer, and drying the coating layer. The coating solution may contain various additives such as an antioxidant, a UV absorbent, a plasticizer and a lubricant according to the purposes.

In order to dissolve the dye and the binder in the solvent, supersonic wave, a homogenizer, a dispersing machine, a sand mill or a stirrer may be employed.

Examples of the solvent contained in the coating solution for the organic recording layer include esters such as butyl acetate and cellosolve acetate; ketones such as methyl ethyl ketone, cyclohexanone and methyl isobutyl ketone; chlorinated hydrocarbons such as dichloromethane, 1,2-dichloroethane and chloroform; amides such as dimethylformamide; hydrocarbons such as cyclohexane; ethers such as tetrahydrofuran, ethyl ether and dioxane; alcohols such as ethanol, n-propanol, isopropanol, n-butanol and diacetone alcohol; fluorinated solvents such as 2,2,3,3-tetrafluoropropanol; and glycol ethers such as ethylene glycol monomethyl ether, ethylene glycol monoethyl ether and propylene glycol monomethyl ether. One of these solvents may be used, or two or more of them can be used together in consideration of solubility of each of the organic dye and binder to be used.

The concentration of the organic dye in the coating solution is in a range from 0.01 to 10 mass % and preferably 0.1 to 5 mass %.

Examples of the coating method include a spraying method, a spin coating method, a dip coating method, a roll coating method, a blade coating method, a doctor roll method and a screen printing method. The organic recording layer may be either a monolayer or multi-layers. The thickness of the organic recording layer is generally in a range from 20 to 500 nm and preferably 50 to 300 nm.

The coating temperature at which the coating solution is applied to the substrate or the light reflection layer is 23 to 50°C, preferably 24 to 40°C, and more preferably 25 to 37°C.

When the coating solution contains a binder, examples of the binder include natural organic polymeric materials such as gelatin, cellulose derivatives, dextran, rosin and rubber; and synthetic organic polymers, including polyurethane; hydrocarbon resins such as polyethylene, polypropylene, polystyrene and polyisobutylene; vinyl resins such as polyvinyl chloride, polyvinylidene chloride, vinyl chloride/vinyl acetate copolymer; acryl resins such as poly methyl acrylate and polymethyl methacrylate; polyvinyl alcohol; chlorinated polyethylene; epoxy resins; butyral resins; rubber derivatives; and initial condensates of thermosetting resins such as phenol/formaldehyde resins. When the binder is contained in the organic recording layer, the amount (mass) of the binder to be used is preferably 0.01 to 50 times and more preferably 0.1 to 5 times as many as that of the organic dye.

The storage stability of the organic recording layer can be improved by compounding the binder into the organic recording layer.

The organic recording layer may also contain any fading preventive to improve the light fastness of the organic recording layer.

The fading preventive is generally a singlet oxygen quencher. The singlet oxygen quencher can be any of those described in the publications, for example, already known patent specifications.

Specific examples of the singlet oxygen quencher include those described in JP-A Nos. 58-175693, 59-81194, 60-18387, 60-19586, 60-19587, 60-35054, 60-36190, 60-36191, 60-44554, 60-44555, 60-44389, 60-44390, 60-54892, 60-47069, 63-209995 and 4-25492, Japanese Patent Application Publication (JP-B) Nos. 1-38680 and 6-26028, German Patent No. 350399 and Journal of Japan Chemical Society, October issue (1992), p1141.

The amount of the fading preventive such as a singlet oxygen quencher is generally in a range from 0.1 to 50 mass %, preferably in a range from 0.5 to 45 mass %, more preferably 3 to 40 mass %, and still more preferably 5 to 25 mass % with respect to the total solid content of the organic recording layer.

An intermediate layer (barrier layer) may be provided on the organic recording layer in order to improve adhesion between the organic recording layer and a cover layer, and preservability of the dye. The barrier layer may be made of any of oxides, nitrides, carbides and sulfides including at least one atom selected from Zn, Si, Ti, Te, Sm, Mo and Ge. Alternatively, the barrier layer may be made of a hybrid material such as ZnS-SiO₂. The barrier layer may be formed by sputtering, vapor-depositing, or ion-plating the above material, and the thickness of the barrier layer is preferably from 1 to 100 nm.

### Cover layer

A cover layer is disposed on the organic recording layer formed on the substrate to protect the organic recording layer. The cover layer includes a transparent film and a sticky layer or an adhesive layer used to adhere the transparent film to the organic recording layer.

The transparent film may be made of any material insofar as the material is transparent. However, the material is preferably polycarbonate, acrylic resin such as polymethyl methacrylate; vinyl chloride resin such as polyvinyl chloride or vinyl chloride copolymer; epoxy resin; amorphous polyolefin; polyester; or cellulose triacetate as the material. Moreover, the material is more preferably polycarbonate or cellulose triacetate.

The term "transparent" means that the transmittance of the film with respect to light used for recording and reproduction is 80% or more.

In addition, the transparent film may contain various additives to such an extent that the effect of the invention is not impaired. For example, the transparent film may contain a UV absorbent for cutting light having a wavelength of 400 nm or less, and/or a dye for cutting light having a wavelength of 500 nm or more.

With regard to physical properties of the surface of the transparent film, the surface roughness is preferably 5 nm or less in terms of a two-dimensional roughness parameter and a three-dimensional roughness parameter. The birefringence of the transparent film is preferably 10 nm or less from the viewpoint of convergence of light used for recording and reproduction.

Although the thickness of the transparent film is properly determined according to the wavelength of laser light used for recording and reproduction and NA, the thickness is preferably in a range from 0.03 to 0.15 mm, and more preferably in a range from 0.05 to 0.12 mm. When the thickness is adjusted in such a range, handling of the film in a process of bonding the cover layer to the organic recording layer is easy and coma aberration can be suppressed.

A protective film or a hard coat layer that prevents the light-incident surface of the transparent film from damaging when the optical information recording medium is produced or used, may be disposed on the light-incident surface.

The transparent film is laminated on the organic recording layer via the sticking agent or adhesive (sticking layer or adhesive layer).

The sticking agent used in the invention can be an acrylic, rubber or silicone adhesive. The sticking agent is preferably an acrylic sticking agent from the viewpoints of transparency and durability. The acrylic sticking agent is preferably a compound prepared by copolymerizing 2-ethylhexyl acrylate or n-butyl acrylate serving as a main component, a short-chain alkyl acrylate or alkyl methacrylate, such as methyl acrylate, ethyl acrylate or methyl methacrylate, which is used to improve cohesive force, and an acrylic acid, methacrylic acid, acrylamide derivative, maleic acid, hydroxyethyl acrylate or glycidyl acrylate, which will be a cross-linking point for a cross-linking agent. Proper selection of the mixing ratio and types of the main component, the short-chain component and the component for providing a cross-linking point may alter the glass transition temperature (Tg) and/or the cross-linking density of the resultant compound.

The cross-linking agent to be used together with the sticking agent can be an isocyanate cross-linking agent. As the isocyanate cross-linking agent, an isocyanate such as tolylenediisocyanate, 4,4'-diphenylmethanediisocyanate, hexamethylenediisocyanate, xylylenediisocyanate, naphthylene-1,5-diisocyanate, o-toluizineisocyanate, isophoronediisocyanate or triphenylmethanetriisocyanate, a product obtained from any of these isocyanates and a polyalcohol and a polyisocyanate produced by condensation of any of these isocyanates may be used. Examples of commercially available products of these isocyanates include Colonate L, Colonate HL, Colonate 2030, Colonate 2031, Millionate MR and Millionate HTL manufactured by Nippon Polyurethane Industry Co., Ltd.; Takenate D-102, Takenate D-110N, Takenate D-200 and Takenate D-202 manufactured by Takeda Chemical Industries, Ltd.; and Desmodule L, Desmodule IL, Desmodule N and Desmodule HL manufactured by Sumitomo Bayer Urethane Co., Ltd.

The sticking agent may be cured either after a predetermined amount of the sticking agent is evenly applied to the surface of the organic recording layer and the transparent film is adhered to the resultant coating, or after a predetermined amount of the sticking agent is evenly applied in advance to a surface of the transparent film which surface is to be in contact with the organic recording layer and the film is adhered to the surface of the recording layer.

Alternatively, a commercially available sticking film having a sticking layer on a transparent film may be used as the cover layer.

The adhesive used to adhere the transparent film to the surface of the organic recording layer is preferably a UV-curable resin, an EB-curable resin, or a thermosetting resin, and more preferably a UV-curable resin.

For example, a predetermined amount of the adhesive is evenly applied by a spin coater to the surface of the organic recording layer, the transparent film is adhered to the resultant coating, the adhesive is evenly spread between the organic recording layer and the cover layer, and then the adhesive is cured. Alternatively, a predetermined amount of the adhesive is applied to one surface of the transparent film, the transparent film is adhered to the surface of the organic recording layer via the coating film, and then the adhesive is cured.

When the adhesive is a UV-curable resin, the UV-curable resin may be applied, as it is, to the surface of a laminate or a cover layer with a dispenser. Alternatively, the UC-curable resin may be dissolved in a proper solvent such as methyl ethyl ketone or ethyl acetate to prepare a coating solution and the coating solution may be applied. The UV-curable resin preferably has a small shrinkage percentage at the time of curing to prevent warpage of the optical information recording medium. Examples of such a UV-curable resin include SD-640™ manufactured by Dainippon Ink and Chemicals, Incorporated.

In this embodiment, as mentioned above, a structure has been described in which a cover layer is provided by adhering a transparent film to the organic recording layer via a sticking agent or an adhesive. However, the cover layer may include only an adhesive (adhesive layer) such as a UV-curable resin.

The thickness of the cover layer is properly determined according to the type of the optical information recording medium to be manufactured. Specifically, in a case of an optical information recording medium for a system using a blue-purple laser to record and reproduce information, the thickness of the cover layer is preferably in a range from 0.09 to 0.11 mm, and more preferably in a range from 0.095 to 0.105 mm.

In a case of an optical information recording medium employed in a system using a blue-purple laser to record and reproduce information, for example, information is recorded and reproduced in the following manner. First, the optical information recording medium, which is being rotated at a predetermined linear velocity (0.5 to 10 m/sec) or a predetermined constant angular speed, is exposed to recording light such as blue-purple laser light having, for example, a wavelength of 405 nm through an object lens from the transparent film side. The organic recording layer absorbs the light and the temperature thereof thereby locally increases, which causes, for example, formation of pits and changes the optical characteristics of the organic recording layer to thereby record information. The information recorded in the above manner can be reproduced by exposing the optical information recording medium, which is being rotated at a predetermined constant linear velocity, to blue-purple laser light from the transparent film side and by detecting the reflected light.

Examples of a laser light source having an oscillation wavelength of 500 nm or less include a blue-purple light-emitting semiconductor laser having an oscillation wavelength range from 390 to 415 nm and a blue-purple light-emitting SHG laser having a central oscillation wavelength of 425 nm.

In order to raise recording density, the NA of the object lens used for pickup is preferably 0.7 or more, and more preferably 0.85 or more.

When the optical information recording medium is a CD-R, a laser light source having an oscillation wavelength from 750 to 800 nm may be used. When the optical information recording medium is a DVD-R, a laser light source having an oscillation wavelength from 630 to 680 nm may be used.

### EXAMPLES

The invention will be explained in more detail by way of examples. However, the invention is not limited to these examples.

### Example 1

### <Production of optical information recording medium>

### Formation of light reflection layer

Silver was sputtered on a surface of a substrate made of a polycarbonate (Panlight AD5503™ manufactured by Teijin Ltd.) by injection molding and having a thickness of 1.1 mm and a diameter of 120 mm, which surface had a pre-groove having a depth of 100 nm, a width of 120 nm, and a track pitch of 320 nm, so as to form a light reflection layer having a thickness of 100 nm.

### Formation of organic recording layer and barrier layer

Thereafter, 20 g of a phthalocyanine dye (I-21) was added to one liter of 2,2,3,3-tetrafluoropropanol and dissolved in the solvent by applying ultrasonic wave to the solvent for two hours so as to prepare a coating solution for forming an organic recording layer. The coating solution was applied to the light reflection layer at 23°C and 50% RH by a spin coating method, while the rotation speed was changed from 300 to 4000 rpm.

Thereafter, the resultant was annealed at 80°C for one hour. The thickness of the resultant organic recording layer was 100 nm.

Then, ZnS-SiO₂ was sputtered on the organic recording layer to form a barrier layer having a thickness of 5 nm.

### Adhesion of cover layer to organic recording layer

An acrylic sticking agent having a glass transition temperature of 32°C, and including a mixed solvent of ethyl acetate and toluene at 1 / 1 ratio was in advance mixed with an isocyanate cross-linking agent (Coronate L™ manufactured by Dainippon Ink and Chemicals Incorporated) including a mixed solvent of ethyl acetate and toluene at 1/1 ratio, at a mass ratio of 100: 0.5 to prepare a sticking agent coating solution. This coating solution was applied to a polycarbonate sheet (transparent film having a thickness of 80 µm) to form a sticking layer having a dry thickness of 20 µm.

Thereafter, the sticking layer was brought into contact with the organic recording layer and a roller was pressed against the both to bond them and to produce an optical information recording medium.

### <Evaluation>

### (1) Measurement of indentation hardness of surface of organic recording layer

The indentation hardness of the surface of the organic recording layer was measured with a device, TRIBOSCOPE™ (HYSITRON Company), under the following conditions. NanoScope II™ manufactured by Digital Instrument Company was employed as AFM used together with TRIBOSCOPE™. The results are shown in Table 6.

### Measuring conditions

- Shape of indenter: Tetrahedron having four equilateral triangle faces, a point angle of 90 degrees, and a top curvature radius of 35 to 50 mm (model number: T1-037)
- Indenter submerged depth: 10 to 30 nm
- Maximum load: 15 µN
- Measuring time: 5 seconds

A half-finished product in which a light reflection layer and an organic recording layer were formed on a substrate, or an optical information recording medium serving as a final product was used as a measuring sample. When the half-finished product was used as the measuring sample, it was cut to obtain a square piece having an edge length of 1 cm, and the piece was adhered to a metal plate with a double-sided tape, and the resultant was disposed at a measuring place, and measurement was conducted. The metal plate was firmly fixed on a piezo at this time. Hardness of each of five portions of the surface of the sample was measured, and maximum and minimum values measured were removed, and an average of the remaining three values measured was calculated.

When a final product was used as the measuring sample, the transparent film and sticking agent which bonded to the organic dye layer were peeled and removed to expose the surface of the organic dye layer, and the resultant was cut to obtain a square piece having an edge length of 1 cm, and measurement and calculation were conducted in the same manner as above.

In this example, the result obtained from a half-finished product is shown.

### (2) Evaluation of recording characteristics of optical information recording medium (measurement of jitter)

Multi-signals were recorded on the optical information recording medium with a record and reproduction evaluating device (DDU 1000™ manufactured by Pulstech Company) mounted with a laser which emitted light having a wavelength of 405 nm and a pickup lens having NA of 0.85, at clock frequency of 66 MHz and linear velocity of 5.2 m/s, and jitter was measured with a time interval analyzer (TIA) (2T to 8 = 0.13 µm). The result is shown in Table 6.

### Examples 2 to 7 and Comparative Examples 1 to 7

Optical information recording media were manufactured in the same manner as in Example 1, except that the organic dye contained in the organic recording layer was altered to those described in Table 6 and/or conditions of the annealing treatment were altered to those described in Table 6. Then, the manufactured optical information recording media were evaluated in the same manner as in Example 1. The results are shown in Table 6.

**Table 6**

| | Type of dye | Conditions of annealing treatment | Indentation hardness (GPa) | Jitter (%) |
|---|---|---|---|---|
| Example 1 | Phthalocyanine dye (I-21) | 80°C, 1 hour | 1.39 | 7.2 |
| Example 2 | Phthalocyanine dye (I-25) | 80°C, 1 hour | 1.3 | 7.4 |
| Example 3 | Phthalocyanine dye (I-21) | 40°C, 1 hour | 1.25 | 7.8 |
| Example 4 | Phthalocyanine dye (I-21) | 80°C, 5 hours | 1.2 | 7.2 |
| Example 5 | Phthalocyanine dye (1-21) | 23°C, 1 hour | 1.1 | 8.9 |
| Example 6 | Phthalocyanine dye (I-21) | 35°C, 1 hour | 1.1 | 8.5 |
| Example 7 | Phthalocyanine dye (I-21) | 80°C, 10 minutes | 1.2 | 8.2 |
| Comparative Example 1 | Cyanine dye A | 80°C, 1 hour | 0.7 | 10.5 |
| Comparative Example 2 | Cyanine dye A | 40°C, 1 hour | 0.6 | 11.0 |
| Comparative Example 3 | Cyanine dye A | 23°C, 1 hour | 0.5 | 11.2 |
| Comparative Example 4 | Cyanine dye B | 80°C, 1 hour | 0.4 | 13.0 |
| Comparative Example 5 | Cyanine dye C | 80°C, 1 hour | 0.6 | 12.1 |
| Comparative Example 6 | Oxonol dye | 80°C, 1 hour | 0.7 | 10.9 |
| Comparative Example 7 | Aminobutadiene dye | 80°C, 1 hour | 0.7 | 10.8 |

The phthalocyanine dye (I-25) used as the organic dye contained in the organic recording layer of Example 2 described in Table 6 indicates one of the above-described specific examples of the phthalocyanine dye. The structures of cyanine dyes A, B and C, the oxonol dye and the aminobutadiene dye which were used as the organic dyes contained in the organic recording layers of Comparative Examples 1 to 7 described in Table 6 are shown below.
Cyanine dye A 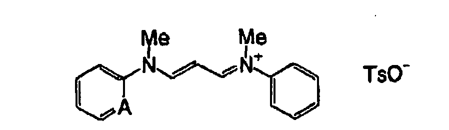
Cyanine dye B 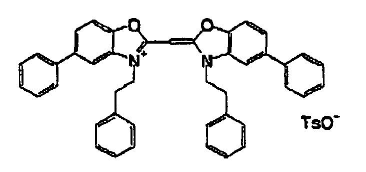
Cyanine dye C 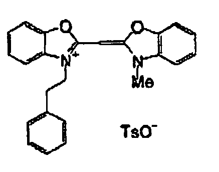
Oxonol dye 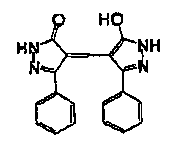
Aminobutadiene dye

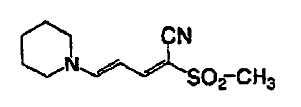

Table 6 clearly shows that the optical information recording media of Examples 1 to 7, the indentation hardness of the surface of the organic recording layer of each of which is within a range from 0.8 to 3.0 GPa at an indenter submerged depth ranging from 10 to 30 nm, have a smaller jitter value and better recording characteristics than the optical information recording media of Comparative Examples 1 to 7, the indentation hardness of the surface of the organic recording layer of each of which is less than 0.8 GPa at an indenter submerged depth ranging from 10 to 30 nm.

## Claims

1. An optical information recording medium comprising a substrate and an organic recording layer disposed on the substrate,
wherein the organic recording layer has a surface indentation hardness of 0.8 to 3.0 GPa at an indenter submerged depth in a range from 10 to 30 nm.

2. The optical information recording medium of Claim 1, wherein the organic recording layer contains an organic dye, and the organic dye is a phthalocyanine dye.

3. The optical information recording medium of Claim 2, wherein the phthalocyanine dye is represented by the following Formula (I): Formula (I): 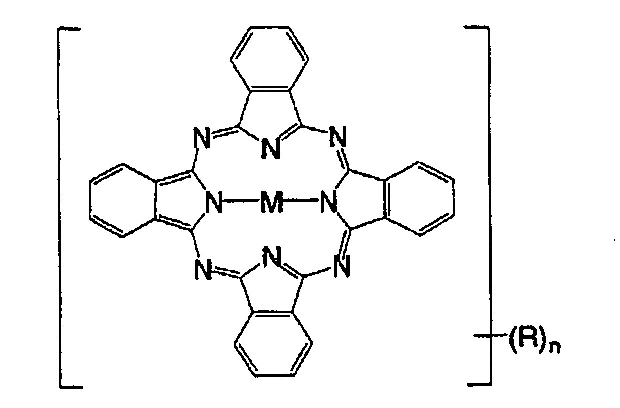 wherein M represents two hydrogen atoms, a divalent to tetravalent metal atom, a divalent to tetravalent oxy metal atom or a divalent to tetravalent metal atom having at least one ligand; R represents a substituent; and n denotes an integer from 1 to 8, provided that when n is 2 or more, plural Rs may be the same or different.

4. The optical information recording medium of Claim 2 or 3, wherein the phthalocyanine dye is represented by the following Formula (II): 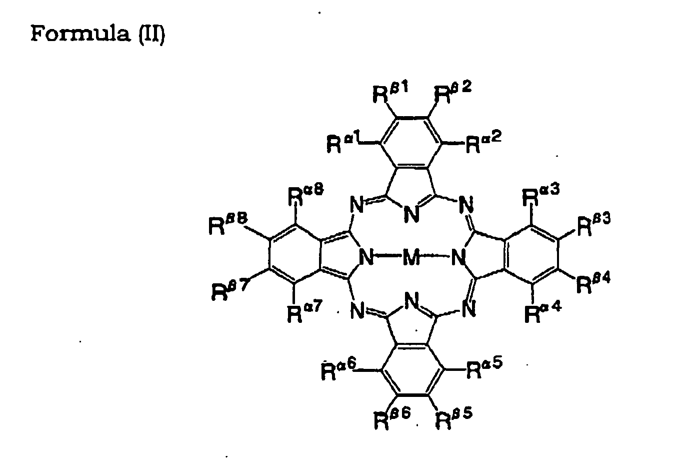 wherein M represents two hydrogen atoms, a divalent to tetravalent metal atom, a divalent to tetravalent oxy metal atom or a divalent to tetravalent metal atom having at least one ligand; R^{α1} to R^{α8} and R^{β1} to R^{β8} each independently represent a hydrogen atom, a halogen atom, a cyano group, a nitro group, a formyl group, a carboxyl group, a sulfo group, an alkyl group, an aryl group, a heterocyclic group, an alkoxy group, an aryloxy group, an acyl group, an alkylsulfonyl group, an arylsulfonyl group, a heterylsulfonyl group, a carbamoyl group, a sulfamoyl group, an alkoxycarbonyl group or an aryloxycarbonyl group; R^{α1} to R^{α8} are not all hydrogen atoms; and at least eight among R^{α1} to R^{α8} and R^{β1} to R^{β8} are hydrogen atoms.

5. The optical information recording medium of any one of Claims 1 to 4, wherein the organic recording layer is annealed at 40 to 100°C for 30 minutes to 12 hours.

6. The optical information recording medium of any one of Claims 1 to 5, wherein the recording medium is irradiated with laser light having a wavelength of 450 nm or less to record and reproduce information.

7. The optical information recording medium of Claim 4, wherein a total of four substituents including either one of R^{α1} and R^{α2}, either one of R^{α3} and R^{α4}, either one of R^{α5} and R^{α6} and either one of R^{α7} and R^{α8} in Formula (II) are not hydrogen atoms at the same time.

8. The optical information recording medium of Claim 4 or 7, wherein M in Formula (II) is a copper atom, a nickel atom or a palladium atom.

9. The optical information recording medium of Claim 4 or 7, wherein M in Formula (II) is a copper atom or a nickel atom.

10. The optical information recording medium of Claim 4 or 7, wherein M in Formula (II) is a copper atom.

## Patentansprüche

1. Optisches Informations-Aufzeichnungsmedium, umfassend ein Substrat und eine auf dem Substrat angeordnete organische Aufzeichnungsschicht, worin die organische Aufzeichnungsschicht eine Oberflächen-Eindruckhärte (surface indentation hardness) von 0,8 bis 3,0 GPa bei einer Eindringtiefe des Eindrückers in einem Bereich von 10 bis 30 nm aufweist.

2. Optisches Informations-Aufzeichnungsmedium nach Anspruch 1, worin die organische Aufzeichnungsschicht einen organischen Farbstoff enthält und der organische Farbstoff ein Phthalocyaninfarbstoff ist.

3. Optisches Informations-Aufzeichnungsmedium nach Anspruch 2, worin der Phthalocyaninfarbstoff durch die folgende Formel (I) dargestellt ist: 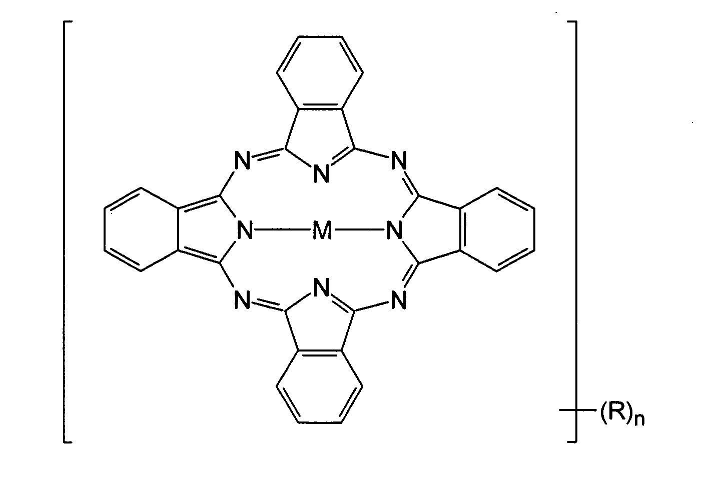 worin M zwei Wasserstoffatome, ein divalentes bis tetravalentes Metallatom, ein divalentes bis tetravalentes Oxymetallatom oder ein divalentes bis tetravalentes Metallatom mit zumindest einem Liganden darstellt; R stellt einen Substituenten dar; und n bezeichnet eine ganze Zahl von 1 bis 8, vorausgesetzt, dass mehrere R gleich oder verschieden sein können, wenn n 2 oder mehr ist.

4. Optisches Informations-Aufzeichnungsmedium nach Anspruch 2 oder 3, worin der Phthalocyaninfarbstoff durch die folgende Formel (II) dargestellt ist: 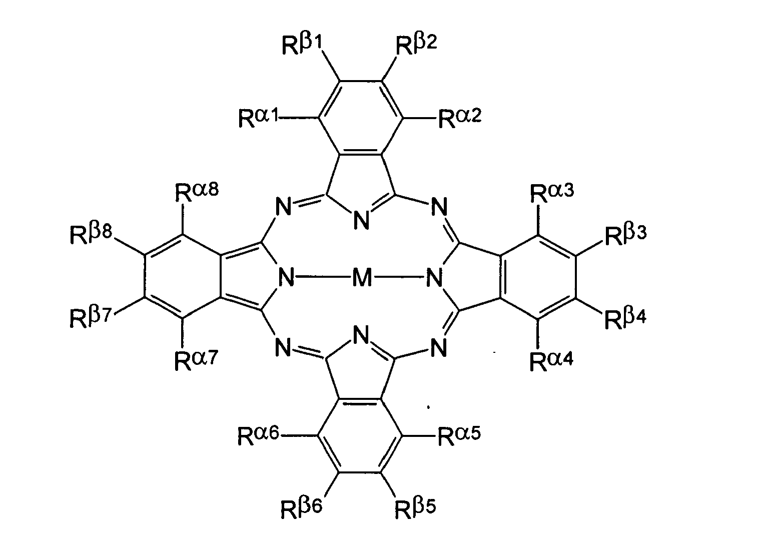 worin M zwei Wasserstoffatome, ein divalentes bis tetravalentes Metallatom, ein divalentes bis tetravalentes Oxymetallatom oder ein divalentes bis tetravalentes Metallatom mit zumindest einem Liganden darstellt; R^{α1} bis R^{α8} und R^{β1} bis R^{β8} stellen jeweils unabhängig voneinander ein Wasserstoffatom, ein Halogenatom, eine Cyanogruppe, eine Nitrogruppe, eine Formylgruppe, eine Carboxylgruppe, eine Sulfogruppe, eine Alkylgruppe, eine Arylgruppe, eine heterocyclische Gruppe, eine Alkoxygruppe, eine Aryloxygruppe, eine Acylgruppe, eine Alkylsulfonylgruppe, eine Arylsulfonylgruppe, eine Heterylsulfonylgruppe, eine Carbamoylgruppe, eine Sulfamoylgruppe, eine Alkoxycarbonylgruppe oder eine Aryloxycarbonylgruppe dar; R^{α1} bis R^{α8} sind nicht alle Wasserstoffatome; und zumindest acht aus R^{α1} bis R^{α8} und R^{β1} bis R^{β8} sind Wasserstoffatome.

5. Optisches Informations-Aufzeichnungsmedium nach irgendeinem der Ansprüche 1 bis 4, worin die organische Aufzeichnungsschicht bei 40 bis 100°C über 30 Minuten bis 12 Stunden getempert wird.

6. Optisches Informations-Aufzeichnungsmedium nach irgendeinem der Ansprüche 1 bis 5, worin das Aufzeichnungsmedium mit Laserlicht einer Wellenlänge von 450 nm oder weniger zur Aufzeichnung und Wiedergabe von Information bestrahlt wird.

7. Optisches Informations-Aufzeichnungsmedium nach Anspruch 4, worin eine Gesamtmenge von vier Substituenten, umfassend eines von R^{α1} und R^{α2}, eines von R^{α3} und R^{α4}, eines von R^{α5} und R^{α6} und eines von R^{α7} und R^{α8}, in Formel (II) nicht gleichzeitig Wasserstoffatome sind.

8. Optisches Informations-Aufzeichnungsmedium nach Anspruch 4 oder 7, worin M in Formel (II) ein Kupferatom, ein Nickelatom oder ein Palladiumatom ist.

9. Optisches Informations-Aufzeichnungsmedium nach Anspruch 4 oder 7, worin M in Formel (II) ein Kupferatom oder ein Nickelatom ist.

10. Optisches Informations-Aufzeichnungsmedium nach Anspruch 4 oder 7, worin M in Formel (II) ein Kupferatom ist.

## Revendications

1. Milieu d'enregistrement d'informations optique comprenant un substrat et une couche d'enregistrement organique placée sur le substrat, dans lequel la couche d'enregistrement organique a une dureté par indentation de surface de 0,8 à 3,0 GPa à une profondeur immergée de l'indenteur comprise dans la plage allant de 10 à 30 nm.

2. Milieu d'enregistrement d'informations optique selon la revendication 1, dans lequel la couche d'enregistrement organique contient un colorant organique, et le colorant organique est un colorant phtalocyanine.

3. Milieu d'enregistrement d'informations optique selon la revendication 2, dans lequel le colorant phtalocyanine est représenté par la formule (I) suivante : 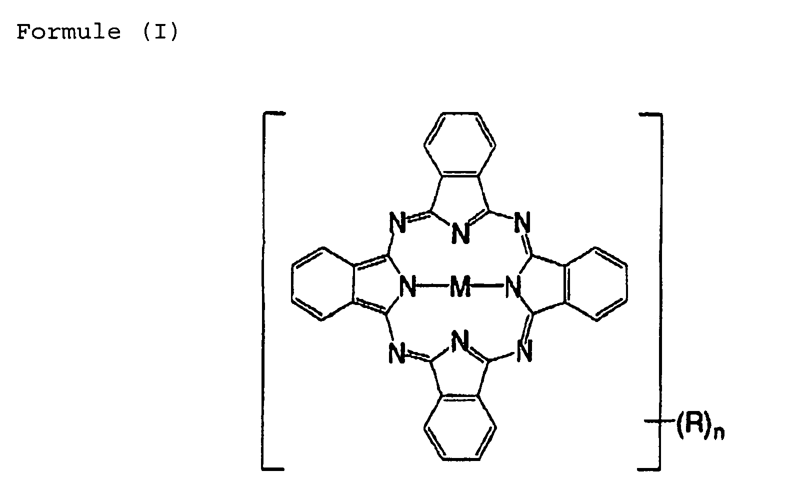 dans laquelle M représente deux atomes d'hydrogène, un atome métallique divalent à tétravalent, un atome oxymétalique divalent à tétravalent ou un atome métallique divalent à tétravalent ayant au moins un ligand ; R représente un substituant ; et n décrit un nombre entier de 1 à 8 ; à condition que lorsque n vaut 2 ou plus, plusieurs groupes R peuvent être identiques ou différents.

4. Milieu d'enregistrement d'informations optique selon la revendication 2 ou 3, dans lequel le colorant phtalocyanine est représenté par la formule (II) suivante : 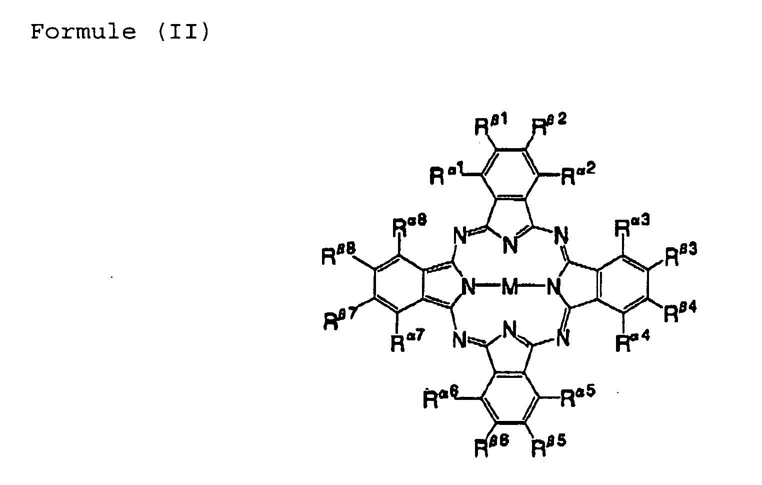 dans laquelle M représente deux atomes d'hydrogène, un atome métallique divalent à tétravalent, un atome oxymétalique divalent à tétravalent ou un atome métallique divalent à tétravalent ayant au moins un ligand ; R^{α1} à R^{α8} et R^{β1} à R^{β8} représentent chacun indépendamment un atome d'hydrogène, un atome d'halogène, un groupe cyano, un groupe nitro, un groupe formyle, un groupe carboxyle, un groupe sulfo, un groupe alkyle, un groupe aryle, un groupe hétérocyclique, un groupe alcoxy, un groupe aryloxy, un groupe acyle, un groupe alkylsulfonyle, un groupe arylsulfonyle, un groupe hétérylsulfonyle, un groupe carbamoyle, un groupe sulfamoyle, un groupe alcoxycarbonyle ou un groupe aryloxycarbonyle ; R^{α1} à R^{α8} ne sont pas tous des atomes d'hydrogène ; et au moins huit de R^{α1} à R^{α8} et R^{β1} à R^{β8} sont des atomes d'hydrogène.

5. Milieu d'enregistrement d'informations optique selon l'une quelconque des revendications 1 à 4, dans lequel la couche d'enregistrement organique est recuite à 40 à 100 °C pendant 30 minutes à 12 heures.

6. Milieu d'enregistrement d'informations optique selon l'une quelconque des revendications 1 à 5, dans lequel le milieu d'enregistrement est irradié avec une lumière laser ayant une longueur d'ondes de 450 nm ou moins pour enregistrer et reproduire les informations.

7. Milieu d'enregistrement d'informations optique selon la revendication 4, dans lequel un total de quatre substituants incluant un de R^{α1} et R^{α2}, un de R^{α3} et R^{α4}, un de R^{α5} et R^{α6}, et un de R^{α7} et R^{α8} dans la formule (II) ne sont pas des atomes d'hydrogène en même temps.

8. Milieu d'enregistrement d'informations optique selon la revendication 4 ou 7, dans lequel M dans la formule (II) est un atome de cuivre, un atome de nickel ou un atome de palladium.

9. Milieu d'enregistrement d'informations optique selon la revendication 4 ou 7, dans lequel M dans la formule (II) est un atome de cuivre ou un atome de nickel.

10. Milieu d'enregistrement d'informations optique selon la revendication 4 ou 7, dans lequel M dans la formule (II) est un atome de cuivre.
